(19) Europäisches Patentamt
European Patent Office
Office européen des brevets

(11) Numéro de publication: **0 160 611**
**A1**

# (12) DEMANDE DE BREVET EUROPEEN

(21) Numéro de dépôt: **85420077.1**

(51) Int. Cl.⁴: **F 16 K 3/08**

(22) Date de dépôt: **26.04.85**

(30) Priorité: **27.04.84 FR 8407241**

(43) Date de publication de la demande: **06.11.85 Bulletin 85/45**

(84) Etats contractants désignés: **BE CH DE FR GB IT LI**

(71) Demandeur: **ERMIS**
**rue de la Gare**
**F-01300 Belley(FR)**

(72) Inventeur: **Baudet, Gérard**
**5, rue du Lac**
**F-74000 Annecy(FR)**

(72) Inventeur: **Lezier, Pascal**
**Chemin de Coirat**
**F-73290 La Motte Servolex(FR)**

(74) Mandataire: **de Beaumont, Michel**
**Cabinet Poncet 7, chemin de Tillier B.P. 317**
**F-74008 Annecy Cedex(FR)**

(54) **Dispositif de reglage de debit d'un fluide tel que l'eau dans une canalisation.**

(57) Le dispositif comprend une vanne à diaphragme (1) comportant un corps (4) à deux demi-coquilles (4a, 4b) définissant un alésage central (3) recevant un noyau (2) rotatif entraîné par un levier (13). Le noyau (2) comporte des canaux longiitudinaux (5) dont une première extrémité (7) communique avec l'orifice d'entrée (6) du corps, et dont l'atre extrémité est tantôt en regard d'un orifice de sortie (8) du corps, tantôt en regard d'une partie pleine de la paroi transversale (9) du corps. Le levier (13) est blocable par un écrou (20) en appui sur bague (17) montée rotative sur le corps.

FIG.1

20
13
4
15
19
17
16
4b
4a
14
10b
10a
23
11
2
12
3
I
9
6
I
8
5
7
22
21
1
17

EP 0 160 611 A1

DISPOSITIF DE REGLAGE DE DEBIT D'UN FLUIDE TEL QUE L'EAU DANS UNE CANALISATION.

La présente invention concerne un nouveau type de dispositif permettant le réglage continu du débit de fluide dans une canalisation.

Cette fonction est habituellement remplie par des vannes dont il existe un grand nombre de types. On connaît en particulier des vannes à boule, permettant l'ouverture ou la fermeture d'une canalisation, mais ne permettant pas le réglage continu du débit avec une précision suffisante.

On connaît également des vannes dans lesquelles la fermeture est réalisée par une paroi de type guillotine coulissant dans un logement transversal. Ces vannes nécessitent l'utilisation de joints statiques d'étanchéité, c'est-à-dire de joints qui, en position de fermeture, sont interposés dans le passage du fluide. Ces vannes demandent de prévoir un débattement latéral suffisant pour la manoeuvre de la paroi.

Le brevet DE-B-1 153 581 décrit une vanne comprenant un corps traversé de part en part par un passage pour le fluide entre un premier orifice et un second orifice destinés à être raccordés respectivement à une canalisation de sortie et à une canalisation d'entrée du fluide. Le corps comprend une vanne de régulation à diaphragme dans laquelle un noyau cylindrique est monté rotatif dans un alésage central cylindrique longitudinal du corps, avec interposition de joints toriques d'étanchéité au voisinage de chacune de ses extrémités, sur la face cylindrique extérieure du noyau. Le noyau comprend des canaux longitudinaux traversants, d'axes décentrés, le noyau pouvant être orienté par rotation de façon continue entre une position d'ouverture dans laquelle les canaux sont en regard de passages fixes les mettant en communication avec l'une des canalisations, et entre une position de fermeture dans laquelle les canaux sont obturés par une partie pleine fixe.

Dans ce dispositif, la partie pleine fixe d'obturation est un disque percé (5), logé dans l'alésage du corps. Le dispositif nécessite de prévoir des joints d'étanchéité statiques, sur la face du noyau en regard du disque percé. Ainsi, les joints statiques et le disque percé rendent le dispositif relativement complexe, et augmentent l'encombrement en longueur.

La présente invention a notamment pour objet d'éviter les inconvénients des dispositifs connus, en proposant une nouvelle structure de vanne reprenant les principales caractéristiques décrites dans le brevet DE-B-1 153 581, et apportant des perfectionnements permettant une simplification considérable sans nuire à l'efficacité technique.

Ainsi, l'invention permet la réalisation d'une vanne ne nécessitant pas l'emploi de joints statiques, une étanchéité suffisante, voire totale, étant assurée par un simple contact métal sur métal, ce qui s'avère suffisant pour des pressions faibles.

Selon un autre objet de l'invention, le réglage de débit est assuré par manoeuvre d'un levier dont le débattement est relativement important, de sorte qu'un réglage fin est rendu possible.

La structure particulière de vanne selon l'invention permet une étanchéité suffisante sans nécessiter d'usinage précis. Il en résulte une grande simplicité de fabrication, un faible coût, et une grande robustesse.

Selon un autre objet, l'invention permet le blocage en position du levier, ainsi que le repérage de sa position pour un réglage de débit.

Un autre objet de l'invention est de réaliser un ensemble pour le réglage de débit du fluide qui soit particulièrement compact, tout en présentant les trois fonctions de coupure totale possible du débit, de filtrage, et de réglage fin et continu de débit. Jusqu'alors, la réalisation de ces trois fonctions nécessitait l'assemblage d'un nombre relativement grand d'éléments assurant chacun séparément l'une des fonctions, de sorte que le coût était élevé et l'encombrement important.

Pour atteindre ces objets ainsi que d'autres, la présente invention prévoit de réaliser une vanne de régulation à diaphragme dans laquelle le corps comprend une paroi transversale traversée par un passage fixe, la paroi étant disposée du côté de la canalisation de sortie, la face intérieure de la paroi transversale et la face extérieure correspondante du noyau étant de formes complémentaires et en contact l'une de l'autre.

Selon une autre caractéristique, le noyau comprend plusieurs canaux répartis de façon symétrique autour de l'axe médian longitudinal et offrant une section totale supérieure à la section des canalisations. Cette disposition permet notamment de réduire les pertes de charge en position d'ouverture maximale.

Selon une réalisation particulière, le corps comprend deux demi- coquilles enfermant le noyau, séparables axialement et solidarisées par des tirants longitudinaux répartis selon le pourtour du corps. Le corps comprend une lumière ménagée selon une portion de circonférence de la paroi latérale cylindrique pour le passage d'un levier de manoeuvre solidaire du noyau.

Selon une autre caractéristique, le corps comprend une bague, montée rotative sur la surface extérieure du corps, et comportant un trou pour le passage avec faible jeu du levier de manoeuvre. Le levier est fileté sur sa portion extérieure et reçoit un écrou de blocage venant porter, par vissage, contre la surface extérieure de la bague pour assurer le blocage du noyau en une position angulaire désirée.

L'ensemble du dispositif de réglage de débit comprend une telle vanne à diaphragme, dont les deux demi-coquilles assemblées s'adaptent en bout d'une troisième partie de corps comprenant une vanne d'arrêt à boule et un élément intermédiaire de filtrage. La troisième partie de corps est un ensemble monobloc comportant une première chambre cylindrique recevant une boule d'obturation percée d'un canal diamétral et montée rotative entre des joints d'étanchéité ; l'ensemble monobloc comprend une seconde chambre intermédiaire cylindrique d'axe transversal, cette seconde chambre étant fermée par un bouchon amovible et recevant une grille cylindrique de filtrage ; une première canalisation oblique relie le fond de la seconde chambre et la première chambre, une seconde canalisation oblique relie la paroi latérale de la seconde chambre et le logement central cylindrique du corps. On réalise ainsi un ensemble monobloc d'encombrement très réduit. En outre, la réalisation de cet ensemble monobloc peut être effectuée par usinage d'un bloc de matière, par exemple en acier inoxydable, les usinages étant simplifiés par le fait que les pièces sont de révolution.

D'autres objets, caractéristiques et avantages de la présente invention ressortiront de la description suivante d'un mode de réalisation particulier, faite en relation avec les figures jointes, parmi lesquelles :

- la figure 1 représente une coupe longitudinale de la vanne à diaphragme selon la présente invention ;

- la figure 2 représente une vue en coupe longitudinale d'une première demi- coquille ;

- la figure 3 représente une vue en coupe longitudinale de la seconde demi- coquille ;

- la figure 4 représente une coupe longitudinale du noyau ;

- la figure 5 représente une coupe transversale du noyau ;

- la figure 6 représente une vue en bout de la vanne à diaphragme ;

- la figure 7 représente une coupe longitudinale de la bague ;

- la figure 8 représente une coupe longitudinale de l'ensemble monobloc;

- la figure 9 représente une coupe selon les axes A-A de la figure 8 ; et

- la figure 10 représente une coupe longitudinale d'une bride d'adaptation de l'ensemble.

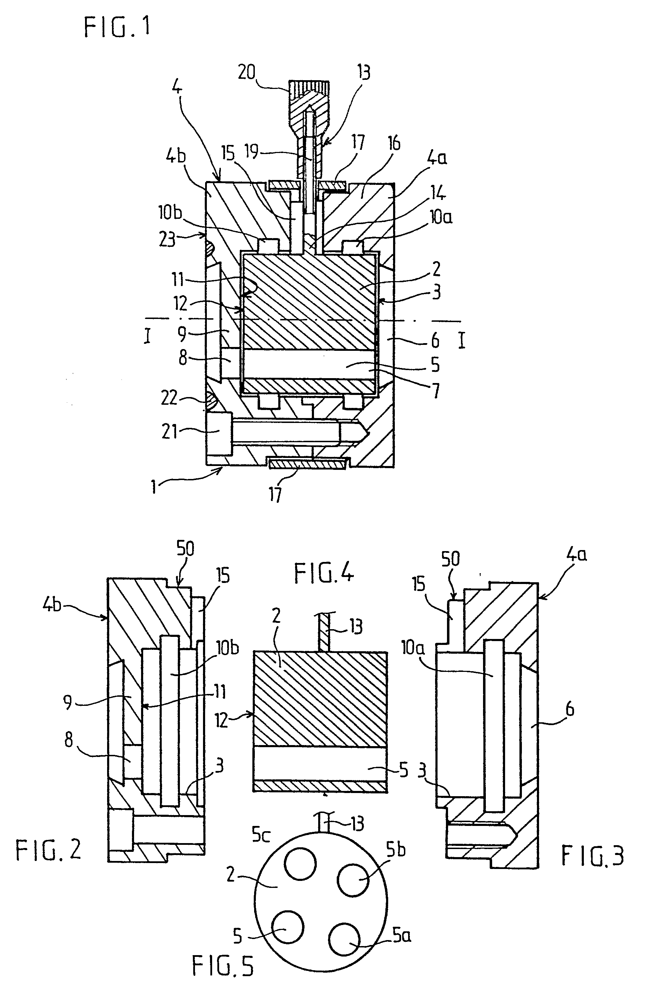

Comme le représentent les figures 1 à 7, une vanne de régulation à diaphragme 1 selon l'invention comprend un noyau cylindrique 2 monté rotatif dans un alésage central cylindrique 3 du corps 4. Le noyau 2 comprend au moins un canal longitudinal 5 traversant, d'axe décentré par rapport à l'axe de symétrie longitudinal du noyau 2. Le corps 4 comporte un orifice d'entrée 6 de dimensions suffisantes pour être en communication permanente avec la première extrémité 7 du canal 5, et un orifice de sortie 8, décentré par rapport à l'axe de symétrie I-I du noyau 2, et de dimensions plus réduites que l'orifice d'entrée 6, de sorte que dans une des positions angulaires du noyau 2, le canal 5 est en relation avec l'orifice de sortie 8 permettant le passage du fluide, et dans une seconde position angulaire du noyau 2 le canal 5 est obturé par la paroi 9 transversale du corps 4 dans laquelle est ménagé l'orifice de sortie 8.

Dans le mode de réalisation représenté sur les figures, le noyau 2 comporte quatre canaux 5, 5a, 5b et 5c répartis régulièrement dans le noyau 2 autour de l'axe de symétrie I-I. Le diamètre et la position des canaux dans le noyau sont tels que la distance entre deux canaux est supérieure à la dimension transversale de l'orifice de sortie 8. De même, la paroi 9 transversale du corps 4 comporte quatre orifices de sortie 8, 8a, 8b et 8c régulièrement répartis autour de l'axe de symétrie I-I et de même écartement que les canaux 5, 5a, 5b et 5c par rapport à l'axe I-I.

La face latérale intérieure cylindrique de l'alésage 3 du corps 4 comporte, au voisinage de chacune des ses extrémités, une gorge annulaire, respectivement 10a et 10b, pour recevoir un joint d'étanchéité torique, non représenté sur les figures, portant sur la surface latérale cylindrique du noyau 2.

La face intérieure 11 de la paroi transversale 9 du corps, et la face extérieure 12 du noyau 2 correspondante sont de formes complémentaires, par exemple planes, et appliquées l'une contre l'autre. Le noyau 2 et le corps 4 peuvent être réalisés en métal, une étanchéité suffisante pouvant être assurée par la simple application des faces 11 et 12 l'une contre l'autre, c'est à dire un contact métal sur métal. La pression du fluide d'entrée, s'exerçant sur le noyau 2, tend en effet à le plaquer contre la paroi 9, améliorant l'étanchéité.

Le noyau 2 est entraîné en rotation par un levier de manoeuvre 13. Le levier, solidaire du noyau 2 selon son extrémité intérieure 14, traverse une lumière 15 ménagée selon une portion de circonférence de la paroi latérale cylindrique 16 du corps 4. La lumière 15 est de dimensions adéquates pour permettre le débattement angulaire suffisant du levier 13 et du noyau 2 entre une première position ou position d'ouverture dans laquelle les canaux 5 sont en regard des orifices de sortie 8, et une seconde position ou position de fermeture dans laquelle les canaux 5 sont en regard des parties pleines de la paroi transversale 9.

La vanne comprend en outre des moyens de blocage du levier 13 en une position désirée, fixant le débit de fluide. Pour cela, le corps 4 comprend une bague 17, montée rotative sur la surface extérieure du corps, et comportant un trou 18 pour le passage avec faible jeu du levier 13 ; le levier 13 est fileté sur sa portion extérieure 19 et reçoit un écrou de blocage 20. Par vissage de l'écrou 20, celui-ci vient porter contre la surface extérieure de la bague 17, provoquant le frottement de la bague contre la partie extérieure du corps 4, assurant le blocage du levier 13 et du noyau 2. La bague assure en outre l'obturation de la lumière 15.

Le corps 4 est réalisé de préférence en deux demi-coquilles, une première demi-coquille 4b, représentée sur la figure 2, comprenant la paroi transversale 9 et une moitié de l'alésage 3, une seconde demi-coquille 4a, représentée sur la figure 3, comprenant la seconde moitié de l'alésage 3 et l'orifice d'entrée 6. Les deux demi-coquilles sont séparables axialement selon l'axe I-I, et comportent des alésages complémentaires pour permettre leur emboîtement, comme le représentent les figures 2 et 3. La lumière 15 est réalisée en deux demi-lumières correspondantes sur chacune des deux demi-coquilles, de part et d'autre du plan de jonction des demi-coquilles. La portion centrale de la surface extérieure du corps 4, de part et d'autre du plan de joint des demi-coquilles, présente une gorge annulaire 50 recevant et guidant la bague 17.

Les deux demi-coquilles 4a et 4b sont assemblées par des boulons longitudinaux, tels que le boulon 21, répartis régulièrement sur le pourtour du corps 4.

La vanne à diaphragme 1 est destinée à être adaptée à des canalisations d'entrée et de sortie, par exemple au moyen de brides, non représentées sur la figure 1. On prévoit pour cela des joints d'étanchéité toriques, tels que le joint 22, disposés dans une gorge circulaire de la face transversale extrême 23 du corps 4, pour assurer l'étanchéité entre cette face 23 et la bride.

On a représenté sur les figures 8 à 10 la constitution générale d'un dispositif filtre-limiteur de débit selon la présente invention. On adapte pour cela une vanne à diaphragme 1, telle que la vanne des figures 1 à 7, en bout d'une troisième partie de corps constituant un ensemble monobloc 24.

L'ensemble monobloc 24 est traversé de part en part par un passage pour le fluide, entre un premier orifice 25 ou orifice d'entrée, et un orifice de sortie 26 en communication avec l'orifice d'entrée 6 de la vanne 1. Ainsi, le corps est entièrement traversé par le passage entre le premier orifice 25 ou orifice d'entrée de l'ensemble monobloc 24, et un second orifice ou orifice de sortie 8 de la vanne 1.

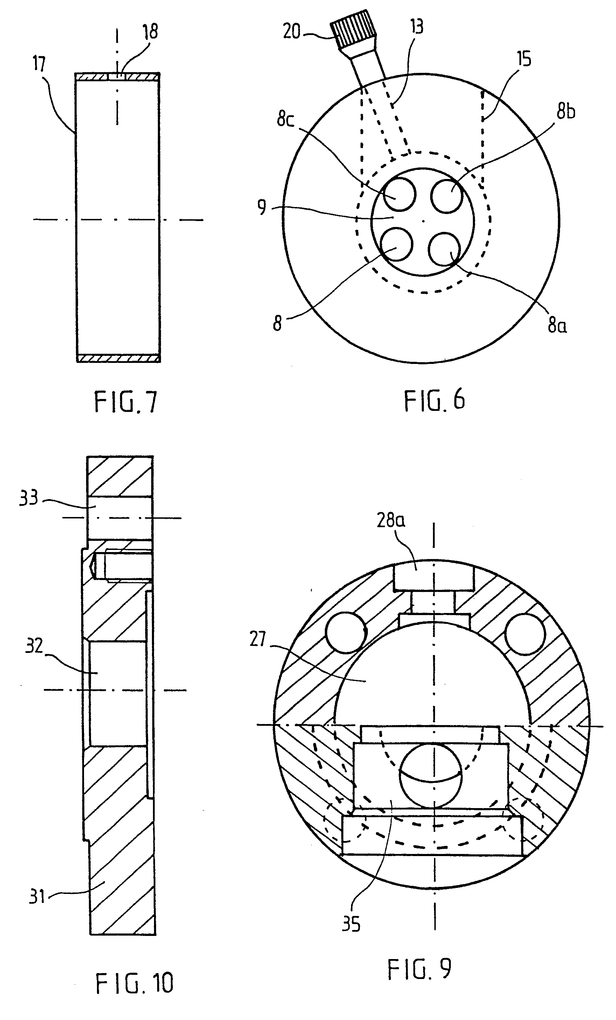

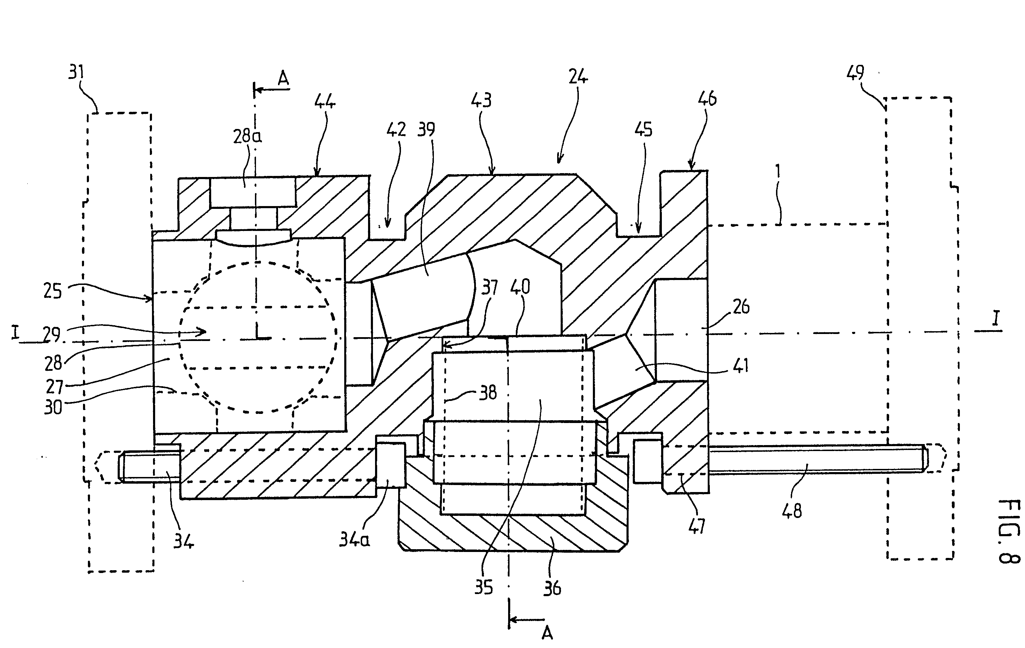

L'ensemble monobloc 24 comprend une première chambre cylindrique 27 pouvant être coaxiale avec l'axe de symétrie I-I du noyau 2, et recevant une boule d'obturation 28 percée d'un canal diamétral 29 et montée rotative entre des joints d'étanchéité 30. La chambre 27 est ouverte du côté du premier orifice 25, et la boule 28 est maintenue en place par adaptation d'une bride 31, représentée en pointillés sur la figure 8, obturant partiellement la chambre 27, et représentée en coupe sur la figure 10. La bride 31 présente un alésage central traversant 32, en communication avec le premier orifice 25 pour le passage du fluide, et des trous latéraux 33, répartis sur le pourtour de la bride, pour le passage de boulons d'adaptation sur les canalisations extérieures. La bride est solidarisée à l'ensemble monobloc 24 au moyen de tiges filetées 34 et d'écrous 34a représentés sur la figure 8. De façon connue, la boule 28 est commandée par un levier rotatif, non représenté sur les figures, et traversant un alésage radial 28a.

L'ensemble monobloc 24 comprend une seconde chambre 35, ou chambre intermédiaire disposée entre la vanne 1 et la chambre 27. La seconde chambre 35 est également cylindrique, d'axe transversal, c'est-à-dire sensiblement perpendiculaire à l'axe longitudinal I-I, et débouche sur la surface latérale extérieure de l'ensemble monobloc 24. Elle peut être fermée par un bouchon 36. Son fond 40 comporte un alésage de centrage 37 de diamètre légèrement inférieur à l'alésage de la chambre 35, et assurant le centrage d'un panier ou grille cylindrique de filtrage 38 s'adaptant dans l'alésage 37. La seconde chambre 35 communique avec la première chambre 27 par une première canalisation oblique 39 débouchant dans le fond 40 de la seconde chambre 35, et communique avec l'orifice d'entrée 6 de la vanne 1 par une seconde canalisation oblique 41 débouchant sur la surface cylindrique latérale de la seconde chambre 35. La surface extérieure du corps (4) et la surface extérieure de la bague (17) comportent des marques pour repérer la position angulaire du levier et le réglage de débit choisi.

La surface latérale extérieure du corps monobloc 24 comprend un premier évidement annulaire 42, séparant la partie centrale de filtrage 43 et la partie vanne à boule 44, l'évidement 42 permettant le passage des écrous 34a vissés en bout des tiges filetées 34 solidaires de la bride 31. La surface extérieure de l'ensemble monobloc 24 comporte un second évidement annulaire 45 séparant la partie centrale de filtrage 43 d'une portion extrême 46 comportant des trous longitudinaux 47 régulièrement répartis sur son pourtour. Les trous 47 sont destinés à recevoir les extrémités de tiges filetées 48 solidaires d'une seconde bride 49, la vanne à diaphragme 1 étant serrée, par des écrous 48a vissés sur les tiges 48, entre la portion d'extrémité 46 de l'ensemble monobloc 24 et la seconde bride 49. Dans cette réalisation, les boulons 21 d'assemblage des demi-coquilles 4a et 4b peuvent être supprimés, ou remplacés par des pions de centrage. Des joints d'étanchéité sont prévus entre la seconde bride 49 et la vanne à diaphragme 1, ainsi qu'entre la première bride 31 et la partie vanne à boule 44.

Le fait que les brides 31 et 49 soient rapportées et amovibles permet l'utilisation d'un même corps pour une adaptation à des canalisations différentes et à des normes de brides différentes.

La présente invention n'est pas limitée aux modes de réalisation qui ont été explicitement décrits, mais elle en inclut les diverses variantes et généralisations contenues dans le domaine des revendications ci-après.

REVENDICATIONS

1 - Dispositif de réglage de débit d'un fluide comprenant un corps (4) traversé de part en part par un passage pour le fluide entre un premier orifice (25) et un second orifice (26) destinés à être raccordés respectivement à une canalisation de sortie et à une canalisation d'entrée de fluide, le corps comprenant une vanne de régulation à diaphragme (1) dans laquelle un noyau (2) cylindrique est monté rotatif dans un alésage central (3) cylindrique longitudinal du corps avec interposition de joints toriques d'étanchéité au voisinage de chacune de ses extrémités, le noyau (2) comprenant au moins un canal longitudinal (5) traversant d'axe décentré, le noyau (2) pouvant être orienté par rotation de façon continue entre une position d'ouverture dans laquelle le canal (5) est en regard d'un passage fixe (8) le mettant en communication avec l'une des canalisations, et entre une position de fermeture dans laquelle le canal (5) est obturé par une partie pleine (9) fixe, le corps (4) comprenant une lumière (15) ménagée selon une portion de circonférence de sa paroi latérale cylindrique (16) pour le passage d'un levier de manoeuvre (13) solidaire du noyau, caractérisé en ce que :

- le passage fixe (8) et la partie pleine fixe (9) sont constitués par une paroi (9) transversale du corps dans laquelle est ménagé le passage (8),

- le passage (8) met le canal (5) du noyau (2) en communication avec la canalisation de sortie,

- la face intérieure (11) de la paroi transversale (9) du corps et la face (12) extérieure correspondante du noyau sont de formes complémentaires et en contact l'une de l'autre.

2 - Dispositif selon la revendication 1, caractérisé en ce que le corps (4) comprend deux demi-coquilles (4a, 4b) enfermant le noyau (2), séparables axialement et solidarisées par des boulons (21) longitudinaux répartis sur le pourtour du corps.

3 - Dispositif selon la revendication 1, caractérisé en ce qu'il comprend une bague (17), montée rotative sur la surface extérieure du corps, et comportant un trou (18) pour le passage avec faible jeu du levier de manoeuvre (13), le levier étant fileté sur sa portion extérieure (19) et recevant un écrou de blocage (20) venant porter, par vissage, contre la surface extérieure de la bague (17) pour assurer le blocage du noyau en une position angulaire désirée.

4 - Dispositif selon la revendication 3, caractérisé en ce que la surface extérieure du corps (4) et la surface extérieure de la bague (17) comportent des marques pour repérer la position angulaire du levier et le réglage de débit choisi.

5 - Dispositif selon l'une quelconque des revendications 1 à 4, caractérisé en ce que l'alésage cylindrique intérieur (3) du corps (4) comprend, au voisinage de chacune de ses extrémités, une gorge annulaire (10a, 10b) recevant un joint torique d'étanchéité portant sur la surface cylindrique extérieure du noyau (2).

6 - Dispositif selon l'une quelconque des revendications 1 à 5, caractérisé en ce qu'il comprend en outre une vanne d'arrêt à boule (28) et un élément intermédiaire de filtrage (38).

7 - Dispositif selon la revendication 6, caractérisé en ce que le corps, comprenant les deux demi-coquilles (4a, 4b), comprend en outre une troisième partie formant un ensemble monobloc (24) recevant une vanne d'arrêt à boule (28) et un élément intermédiaire de filtrage (38), l'ensemble monobloc (24) comprenant une première chambre cylindrique (27) recevant une boule d'obturation (28) percée d'un canal diamétral (29) et montée rotative entre des joints d'étanchéité (30), l'ensemble monobloc (24) comprenant une seconde chambre intermédiaire cylindrique (35) d'axe transversal, cette seconde chambre étant fermée par un bouchon amovible (36) et recevant une grille cylindrique de filtrage (38), une première canalisation oblique (39) reliant le fond (40) de la seconde chambre (35) et la première chambre (27), une seconde canalisation oblique (41) reliant la partie latérale de la seconde chambre (35) et l'orifice d'entrée (6) de la vanne à diaphragme (1).

8 - Dispositif selon la revendication 7, caractérisé en ce que la première chambre (27) est partiellement obturée par une bride (31) d'extrémité percée d'un trou central (32) de passage de fluide, la bride (31) étant solidarisée à l'ensemble monobloc (24) par des tiges filetées (34) et des écrous de serrage (34a), et en ce que la vanne à diaphragme (1) est serrée entre une seconde bride (49) et la portion d'extrémité (46) de l'ensemble monobloc (24) par des tiges filetées (48) et des écrous (48a).

FIG.1

20
13
4
17
16
4b
15
19
4a
14
10b
10a
23
2
11
3
12
I
9
6
I
8
5
7
22
21
1
17

50
15
4b
10b
9
11
8
3
FIG.4
2
13
12
5
50
15
4a
10a
6
3
13
5c
5b
2
5
5a

FIG. 2

FIG.3

FIG.5

18
17

FIG. 7

20
13
15
8c
8b
9
8
8a

FIG. 6

33
32
31

FIG. 10

28a
27
35

FIG. 9

FIG. 8

I
49
1
48
26
41
46
47
45
24
36
A
40
35
43
37
38
42
39
34a
44
A
28a
34
31
25
29
28
27
30
I

Office européen des brevets

# RAPPORT DE RECHERCHE EUROPEENNE

0160611

Numéro de la demande

EP 85 42 0077

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
| --- | --- | --- | --- |
| A | GB-A- 296 164 (DINE) * En entier * | 1 | F 16 K 3/08 |
| A | CH-A- 180 758 (BALMER) * En entier * | 1 | |
| A | CH-A- 479 013 (NUSSBAUM) * En entier * | 1 | |
| A | FR-A-1 235 296 (PERDRIEL) * En entier * | 1 | |
| D,A | DE-B-1 153 581 (GAMPPER) * En entier * | 1 | |

DOMAINES TECHNIQUES RECHERCHES (Int. Cl.4)

F 16 K

Le présent rapport de recherche a été établi pour toutes les revendications

| Lieu de la recherche | Date d'achèvement de la recherche | Examinateur |
| --- | --- | --- |
| LA HAYE | 25-06-1985 | VERELST P.E.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03.82